# EUROPÄISCHE PATENTSCHRIFT

(11) **EP 2 981 700 B1**
(45) Veröffentlichungstag und Bekanntmachung des Hinweises auf die Patenterteilung: **11.07.2018**
(21) Anmeldenummer: 14714733.4
(22) Anmeldetag: 03.04.2014
(51) Int. Cl.: B01D 46/00, B01D 46/10, B01D 46/12, B01D 46/52, F02M 35/024

(54) **LUFTFILTERELEMENT**
AIR FILTER ELEMENT
ÉLÉMENT DE FILTRATION D'AIR

(30) Priorität: 05.04.2013 DE 102013206090
(43) Veröffentlichungstag der Anmeldung: 10.02.2016
(73) Patentinhaber: Mahle International GmbH, 70376 Stuttgart (DE)
(72) Erfinder: HARR, Hartmut, 71111 Waldenbuch (DE); KAISER, Stefan, 71686 Remseck (DE); STEPPE, Markus, 71272 Malmsheim (DE)
(74) Vertreter: BRP Renaud & Partner mbB Rechtsanwälte Patentanwälte Steuerberater
(86) Internationale Anmeldenummer: PCT/EP2014/056686
(87) Internationale Veröffentlichungsnummer: WO 2014/161933

(56) Entgegenhaltungen:
- DE-A1- 1 751 688
- DE-A1-102007 024 287
- DE-U1-202008 013 309
- US-A1- 2011 277 429

## Beschreibung

Die vorliegende Erfindung betrifft ein Luftfilterelement für eine Luftfiltereinrichtung einer Frischluftanlage einer Brennkraftmaschine, vorzugsweise eines Fahrzeugs, mit den Merkmalen des Oberbegriffs des Anspruchs 1.
Aus der DE 10 2007 024 287 A1 ist ein derartiges Luftfilterelement bekannt. Es umfasst einen U-förmigen Filterkörper, der einen Innenraum quer zu einer Axialrichtung des Filterelements begrenzt. Ferner sind zwei Endplatten vorgesehen, die in der Axialrichtung voneinander beabstandet sind und zwei voneinander abgewandte axiale Seiten des Filterkörpers luftdicht verschließen. Der Filterkörper ist quer zur Axialrichtung von Luft durchströmbar, wobei im Bereich einer offenen Seite des Filterkörpers eine zum Innenraum offene Durchtrittsöffnung vorgesehen ist, die als Lufteinlass oder als Luftauslass dient und die quer zur Axialrichtung von Luft durchströmbar ist.

DE 20 2008 013 309 U1 offenbart auch ein derartiges Luftfilterelement. Es hat sich gezeigt, dass derartige Luftfilterelemente, die im Wesentlichen quer zu ihrer Axialrichtung in ein Gehäuse einer Luftfiltereinrichtung einsetzbar sind, eine bessere Bauraumausnutzung ermöglichen als beispielsweise konventionelle Ringfilterelemente, deren Filterkörper kreisringförmig geschlossen ist und die eine axial durchströmbare Durchtrittsöffnung als Lufteinlass bzw. Luftauslass aufweisen.
Die vorliegende Erfindung beschäftigt sich mit dem Problem, für ein Luftfilterelement der eingangs genannten Art eine verbesserte Ausführungsform anzugeben, die sich insbesondere dadurch auszeichnet, dass sich eine bessere Bauraumausnutzung realisieren lässt und/oder dass sich längere Wartungsintervalle realisieren lassen.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Luftfilterelement zusätzlich zu dem U-förmigen Filterkörper, der im Folgenden auch als Haupt-Filterkörper bezeichnet wird, mit zumindest einem weiteren oder zusätzlichen Filterkörper auszustatten, der im Folgenden auch als Zusatz-Filterkörper bezeichnet wird. Dieser wenigstens eine Zusatz-Filterkörper ist dabei an oder in einer der Endplatten angeordnet, wo er eine in der jeweiligen Endplatte zusätzlich vorgesehene Durchtrittsöffnung verschließt. Diese in der jeweiligen Endplatte vorgesehene Durchtrittsöffnung kann im Folgenden auch als Zusatz-Durchtrittsöffnung bezeichnet werden, während die im Bereich der offenen Seite des Haupt-Filterkörpers vorgesehen Durchtrittsöffnung im Folgenden auch als Haupt-Durchtrittsöffnung bezeichnet werden kann. Durch die Ausstattung des Luftfilterelements mit wenigstens einem Zusatz-Filterkörper, der parallel zur Axialrichtung von Luft durchströmbar ist, kann am Filterelement deutlich mehr durchströmbares Filtermaterial bereitgestellt werden, wodurch sich die Filtrationswirkung auf mehr Filterfläche verteilen kann. Insgesamt lässt sich dadurch die Schmutzaufnahmefähigkeit des Filterelements signifikant verbessern. Dies lässt sich zum einen dazu nutzen, die Reinigungswirkung des Filterelements hin zu höheren Reinigungsgraden zu verbessern. Zusätzlich oder alternativ lässt sich dies zum anderen dazu nutzen, die Zeit bis zum Erreichen einer kritischen Beladung des Filtermaterials zu verlängern, wodurch sich die Wartungsintervalle zum Wechseln des Filterelements vergrößern lassen. Des Weiteren lassen sich mit Hilfe des hier vorgestellten Filterelements vorhandene Bauräume besser nutzen, beispielsweise wenn axial zum Luftfilterelement im zugehörigen Filtergehäuse noch Bauraum zur Verfügung steht, der eine Axialströmung durch den Zusatz-Filterkörper ermöglicht.

Entsprechend einer vorteilhaften Ausführungsform kann der Zusatz-Filterkörper in die Zusatz-Durchtrittsöffnung eingesetzt sein. Eine Einfassung der Zusatz-Durchtrittsöffnung bildet dann gleichzeitig auch eine Einfassung für den Zusatz-Filterkörper.

Bevorzugt ist jedoch eine Ausführungsform, bei welcher der Zusatz-Filterkörper die Zusatz-Durchtrittsöffnung an einer Seite der jeweiligen Endplatte abdeckt. Dabei kann der Zusatz-Filterkörper an einer dem Innenraum des Luftfilterelements zugewandten Innenseite der jeweiligen Endplatte angeordnet sein. Auf diese Weise kann die zusätzliche Filterfläche bereitgestellt werden, ohne das Einbauvolumen des Filterelements zu vergrößern. Bevorzugt ist jedoch eine Ausführungsform, bei welcher der Zusatz-Filterkörper an einer vom Innenraum abgewandten Außenseite der jeweiligen Endplatte angeordnet ist. In diesem Fall vereinfacht sich die Montage des Filterelements.

Entsprechend einer vorteilhaften Ausführungsform kann die jeweilige Endplatte einen die Zusatz-Durchtrittsöffnung einfassenden, von der Endplatte abstehenden Kragen aufweisen, in den der Zusatz-Filterkörper axial eingesetzt ist. Durch den Kragen lässt sich der Zusatz-Filterkörper besonders einfach radial an der jeweiligen Endplatte positionieren. Mit Hilfe eines derartigen Kragens lässt sich, insbesondere in Verbindung mit Klebstoff, auch eine luftdichte Einfassung des Zusatz-Filterkörpers einfach realisieren. Anstelle eines derartigen Kragens kann auch eine Verbindungskontur umlaufen, mit deren Hilfe eine luftdichte Verbindung zwischen dem Zusatz-Filterkörper und der jeweiligen Endplatte herstellbar ist, z.B. durch Verschweißen oder Plastifizieren.

Bei einer anderen vorteilhaften Ausführungsform kann in der Zusatz-Durchtrittsöffnung eine luftdurchlässige Stützstruktur angeordnet sein, an der sich der Zusatz-Filterkörper axial abstützt. Der Zusatz-Filterkörper wird axial von Luft durchströmt, so dass letztlich Axialkräfte am Filterkörper angreifen. Mit Hilfe der Stützstruktur lässt sich der Zusatz-Filterkörper hinsichtlich seiner Form stabilisieren, sofern sich der Zusatz-Filterkörper in seiner Durchströmungsrichtung an der Stützstruktur axial abstützt.

Eine derartige Stützstruktur kann insbesondere integral an der jeweiligen Endplatte ausgeformt sein. Beispielsweise lässt sich eine derartige Endplatte mit der zugehörigen Stützstruktur aus Kunststoff spritzformen. Die Stützstruktur kann als Gitterstruktur konzipiert sein. Insbesondere kann die Stützstruktur in einer Plattenebene liegen, in der auch die Endplatte liegt und in der sich die Zusatz-Durchtrittsöffnung befindet.

Bevorzugt ist eine Verwendung des Luftfilterelements derart, dass die Durchströmung mit zu reinigender Luft von außen nach innen erfolgt. Dementsprechend ist der Zusatz-Filterkörper bevorzugt an einer vom Innenraum abgewandten Außenseite der jeweiligen Endplatte angeordnet, so dass sich der Zusatz-Filterkörper bei vorhandener Stützstruktur von außen axial an der Stützstruktur abstützen kann.

Gemäß einer vorteilhaften Ausführungsform kann sich die Zusatz-Durchtrittsöffnung bis zu einer dem Innenraum zugewandten Innenseite des Haupt-Filterkörpers erstrecken. Auf diese Weise kann die Zusatz-Durchtrittsöffnung eine besonders große Durchtrittsfläche mit einem entsprechend großen Durchströmungsquerschnitt bereitstellen.

Die jeweilige Zusatz-Durchtrittsöffnung kann sich quer zur Axialrichtung bis zur offenen Seite des Haupt-Filterkörpers erstrecken, wodurch die Zusatz-Durchtrittsöffnung einen besonders großen durchströmbaren Querschnitt aufweisen kann.

Bei einer anderen vorteilhaften Ausführungsform kann eine Verschlussplatte an einer offenen Seite des Haupt-Filterkörpers angeordnet sein und an den beiden Endplatten befestigt sein, wobei diese Verschlussplatte die Haupt-Durchtrittsöffnung aufweist. Mit Hilfe einer derartigen Verschlussplatte lässt sich der Haupt-Filterkörper besonders einfach an den Stirnseiten der U-Schenkel luftdicht verschließen. Gleichzeitig wird durch das Verbinden der Verschlussplatte mit den beiden Endplatten eine höhere Stabilität für das Luftfilterelement geschaffen.

Die Zusatz-Durchtrittsöffnung kann sich quer zur Axialrichtung bis zur Verschlussplatte erstrecken, so dass der Zusatz-Filterkörper an die Verschlussplatte angrenzen kann und ggf. gegenüber der Verschlussplatte abgedichtet sein kann.

Bei einer anderen vorteilhaften Ausführungsform kann der jeweilige Zusatz-Filterkörper ein ebener Plattenfilterkörper aus einem plissierten Filtermaterial sein, dessen Falten quer zur Axialrichtung verlaufen. Derartige Plattenfilterkörper lassen sich besonders preiswert herstellen und vergleichsweise einfach handhaben.

Bei einer vorteilhaften Weiterbildung kann der Plattenfilterkörper zumindest an zwei quer zu den Falten verlaufenden Randseiten einen bandförmigen Seitenstreifen aufweisen. Mit Hilfe des jeweiligen Seitenstreifens lassen sich an der jeweiligen Randseite Leckagen vermeiden. Dabei kann der jeweilige Seitenstreifen selbst luftundurchlässig konfiguriert sein, so dass die jeweilige Randseite des Plattenfilterkörpers mit Hilfe des Seitenstreifens luftdicht verschlossen wird. Bevorzugt handelt es sich beim Seitenstreifen jedoch ebenfalls um ein Filtermaterial, so dass die Randseiten des Plattenfilterkörpers von Luft durchströmbar bleiben, wobei den Seitenstreifen dabei jedoch eine zusätzliche Reinigungs- bzw. Filterfunktion zukommt. Die Seitenstreifen können angeklebt oder angeschweißt sein. Entsprechend einer besonders vorteilhaften Ausführungsform können die Seitenstreifen in der Umfangsrichtung geschlossen umlaufend angeordnet sein. Insbesondere kann dann ein einziger Seitenstreifen vorgesehen sein, der sich unterbrechungsfrei über drei oder vier Randseiten des vorzugsweise rechteckigen Plattenfilterkörpers erstreckt.

Bei einer anderen vorteilhaften Ausführungsform kann der Haupt-Filterkörper ein plissiertes Filtermaterial aufweisen, dessen Falten parallel zur Axialrichtung verlaufen. Durch diese Bauform lässt sich beispielsweise eine Rundung gegenüber der offenen Seite des Haupt-Filterkörpers besonders einfach formen.

Bei einer anderen Ausführungsform kann die jeweilige Endplatte eben konfiguriert sein. Sofern beide Endplatten eben konfiguriert sind, ist eine Ausführungsform bevorzugt, bei der die beiden Endplatten parallel zueinander verlaufen. Vorzugsweise erstreckt sich die jeweilige ebene Endplatte senkrecht zur Axialrichtung. Ebenso sind Konfigurationen denkbar, bei denen die jeweilige ebene Endplatte gegenüber einer senkrecht zur Axialrichtung verlaufenden Normalebene geneigt ist. Zusätzlich oder alternativ können die beiden ebenen Endplatten zueinander geneigt verlaufen.

Bei einer anderen Ausführungsform kann zumindest eine der Endplatten an ihrem Außenrand zumindest ein Befestigungsauge aufweisen, mit dessen Hilfe das Filterelement zum Beispiel in einem passenden Filtergehäuse fixiert werden kann.

Bei einer weiteren Ausführungsform kann das Luftfilterelement mit einer Befestigungskonsole ausgestattet sein, die in einem der offenen Seite des Haupt-Filterkörpers gegenüberliegenden Bereich an beiden Endplatten befestigt ist. Beispielsweise ist diese Befestigungskonsole an beide Endplatten angeklebt oder angeschweißt. Die Befestigungskonsole weist zumindest einen Befestigungsabschnitt auf, mit dessen Hilfe das Luftfilterelement in einem Filtergehäuse einer Luftfiltereinrichtung fixiert werden kann. Beispielsweise kann in einem solchen Befestigungsabschnitt ein Befestigungsauge vorgesehen sein.

Das Luftfilterelement kann so konzipiert sein, dass nur eine der Endplatten mit einem derartigen Zusatz-Filterkörper ausgestattet ist, während die andere Endplatte dann als geschlossene Endplatte konfiguriert ist. Alternativ ist auch eine Ausführungsform denkbar, bei der beide Endplatten jeweils zumindest eine Zusatz-Durchtrittsöffnung aufweisen und bei der an jeder Endplatte zumindest ein derartiger Zusatz-Filterkörper vorgesehen ist. Bevorzugt sind dann Ausführungsformen, bei denen die beiden Endplatten baugleich ausgeführt sind und bei denen die beiden Zusatz-Filterkörper ebenfalls baugleich ausgestaltet sind.

Gemäß einer anderen vorteilhaften Ausführungsform kann vorgesehen sein, dass ein Abstand zwischen den Endplatten kleiner ist als eine Breite der jeweiligen Endplatte und/oder als eine Länge der jeweiligen Endplatte. Dabei ist der Abstand parallel zur Axialrichtung des Luftfilterelements gemessen, während die Breite und die Länge quer zueinander und quer zur Axialrichtung gemessen sind. Hierdurch wird auch eine parallel zur Axialrichtung gemessene Höhe des Haupt-Filterkörpers relativ klein. Bei parallel zur Höhenrichtung verlaufenden Falten des vorzugsweise gefalteten Filtermaterials, ergibt sich dadurch eine besonders hohe Steifigkeit bzw. Stabilität des Luftfilterelements.

Zusätzlich oder alternativ kann vorgesehen sein, dass ein Abstand zwischen den Endplatten kleiner ist als eine Breite des jeweiligen Zusatz-Filterkörpers und/oder als eine Länge des jeweiligen Zusatz-Filterkörpers. Auch hier ist der Abstand parallel zur Axialrichtung des Luftfilterelements gemessen, während die Breite und die Länge quer zueinander und quer zur Axialrichtung gemessen sind. Bei dieser Bauform ergibt sich eine relativ große Filtrationsfläche.
Der Zusatz-Filterkörper kann bevorzugt dieselben Filtrationseigenschaften aufweisen wie der Haupt-Filterkörper. Insbesondere kann das gleiche Filtermaterial zum Herstellen des Zusatz-Filterkörpers und des Haupt-Filterkörpers verwendet werden. Weiterhin kann der Zusatz-Filterkörper ein räumliches Gebilde sein, z.B. durch eine Plissierung, das über eine gesonderte Abdichtung im Bereich der Endplatten verfügt. Diese Abdichtung kann beispielsweise durch ein Seitenband oder bei gefaltetem bzw. plissiertem Filtermaterial durch eine Taschenverklebung realisiert werden. Weiterhin ist erfindungsgemäß eine parallel zur Axialrichtung gemessene Höhe des jeweiligen Zusatz-Filterkörpers größer, insbesondere mehr als 5 Mal größer oder mehr als 10 Mal größer, als eine parallel zur Axialrichtung gemessene Dicke der jeweiligen Endplatte. Vorzugsweise ist die Höhe des jeweiligen Zusatz-Filterkörpers größer als eine Dicke des Filtermaterials, aus dem der Zusatz-Filterkörper hergestellt ist. Weitere wichtige Merkmale und Vorteile der Erfindung ergeben sich aus den Unteransprüchen, aus den Zeichnungen und aus der zugehörigen Figurenbeschreibung anhand der Zeichnungen.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Axialansicht eines Luftfilterelements,
- Fig. 2: eine Axialansicht wie in Fig. 1, jedoch bei einer anderen Ausführungsform,
- Fig. 3: eine Queransicht des Luftfilterelements entsprechend einer Blickrichtung III in Fig. 1,
- Fig. 4: eine geschnittene isometrische Ansicht des Luftfilterelements bei einer weiteren Ausführungsform,
- Fig. 5: eine Schnittansicht des Luftfilterelements aus Fig. 4,
- Fig. 6: eine Ansicht eines Details VI aus Fig. 5, jedoch bei einer anderen Ausführungsform,
- Fig. 7: eine Schnittansicht wie in Fig. 5, jedoch bei einer anderen Ausführungsform,
- Fig. 8: eine Schnittansicht des Filterelements aus Fig. 7 entsprechend Schnittlinien VIII-VIII,
- Fig. 9: eine Schnittansicht wie in Fig. 8, jedoch bei einer anderen Ausführungsform.

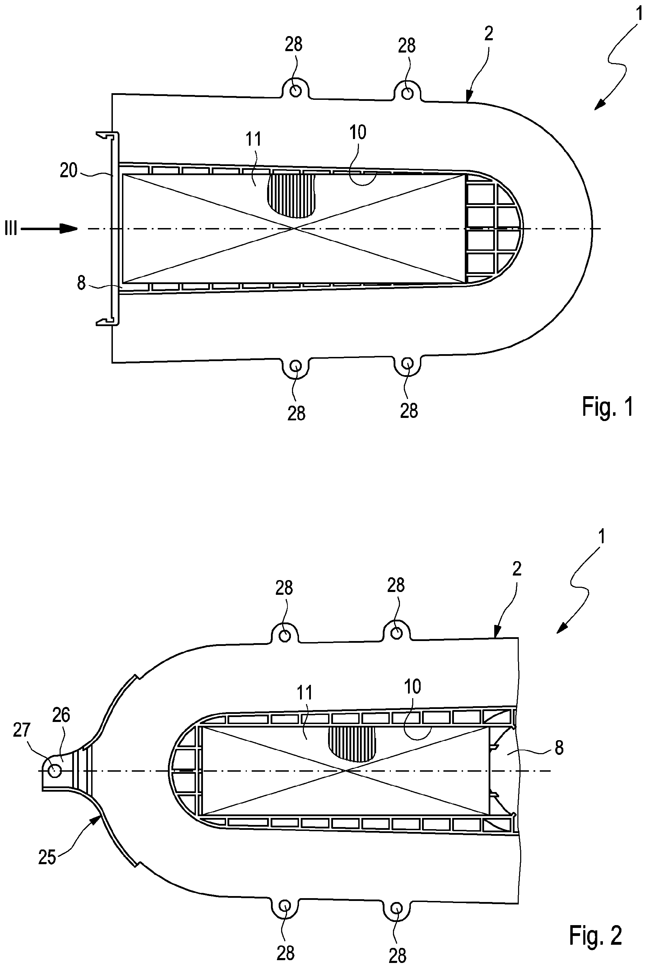

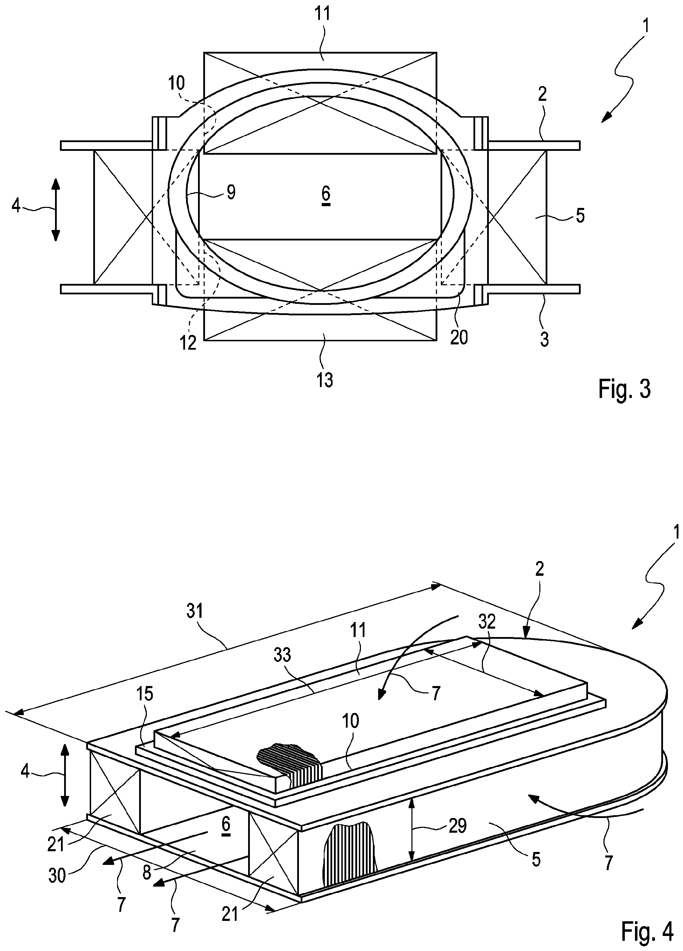

Entsprechend den Figuren 1 bis 9 umfasst ein Luftfilterelement 1 zwei Endplatten 2, 3, die in einer Axialrichtung 4 des Luftfilterelements 1 voneinander beabstandet sind. Die Axialrichtung 4 ist dabei in den Figuren 3 bis 9 jeweils durch einen Doppelpfeil angedeutet. In den Figuren 1 und 2 steht die Axialrichtung 4 senkrecht auf der Zeichnungsebene.

Beim hier vorgestellten Luftfilterelement 1 handelt es sich bevorzugt um ein Fahrzeugluftfilterelement zur Verwendung in einer Frischluftanlage einer Brennkraftmaschine eines Kraftfahrzeugs.

Das Luftfilterelement 1 weist axial zwischen den beiden Endplatten 2, 3 einen U-förmigen oder Hufeisen-förmigen Haupt-Filterkörper 5 auf, der einen Innenraum 6 des Luftfilterelements 1 quer zur Axialrichtung 4 begrenzt. Die beiden Endplatten 2, 3 verschließen zwei in der Axialrichtung 4 voneinander abgewandte axiale Seiten des Haupt-Filterkörpers 5 luftdicht. Hierzu kann der Haupt-Filterkörper 5 mit den Endplatten 2, 3 verschweißt oder verklebt oder plastifiziert sein. Der Haupt-Filterkörper 5 ist quer zur Axialrichtung 4 von Luft durchströmbar. Die im Betrieb einer Luftfiltereinrichtung, in dessen Gehäuse das hier präsentierte Luftfilterelement 1 einsetzbar ist, entstehende Luftströmung ist in den Figuren durch Pfeile 7 angedeutet.

Der Haupt-Filterkörper 5 besitzt aufgrund seiner U-Form oder Hufeisenform eine offene Seite 8. Im Bereich dieser offenen Seite 8 besitzt das Luftfilterelement 1 eine zum Innenraum 6 hin offene Haupt-Durchtrittsöffnung 9, die bei der in den Figuren angedeuteten Strömungssituation als Luftauslass dient. Grundsätzlich kann die Haupt-Durchtrittsöffnung 9 bei umgekehrter Strömungsrichtung auch als Lufteinlass dienen. In jedem Fall wird die Haupt-Durchtrittsöffnung 9 im Betrieb der Luftfiltereinrichtung quer zur Axialrichtung 4 von Luft durchströmt.

Zumindest eine der Endplatten 2, 3, vorzugsweise die in den Figuren 1 und 2 dem Betrachter zugewandte Endplatte 2 und die in den Figuren 3 bis 9 obere Endplatte 2 weist eine zum Innenraum 6 hin offene Zusatz-Durchtrittsöffnung 10 auf, der ein Zusatz-Filterkörper 11 zugeordnet ist. Dabei ist die jeweilige Zusatz-Durchtrittsöffnung 10 ausschließlich durch den Zusatz-Filterkörper 11 hindurch von Luft durchströmbar. Dabei ist der Zusatz-Filterkörper 11 parallel zur Axialrichtung 4 von Luft durchströmbar. In den Figuren 3 und 7 bis 9 ist auch die andere Endplatte 3 mit einer Zusatz-Durchtrittsöffnung 12 versehen, die zum Innenraum 6 hin offen ist und die mit einem weiteren Zusatz-Filterkörper 13 verschlossen ist, derart, dass auch diese Zusatz-Durchtrittsöffnung 12 nur durch den Zusatz-Filterkörper 13 von Luft durchströmbar ist.

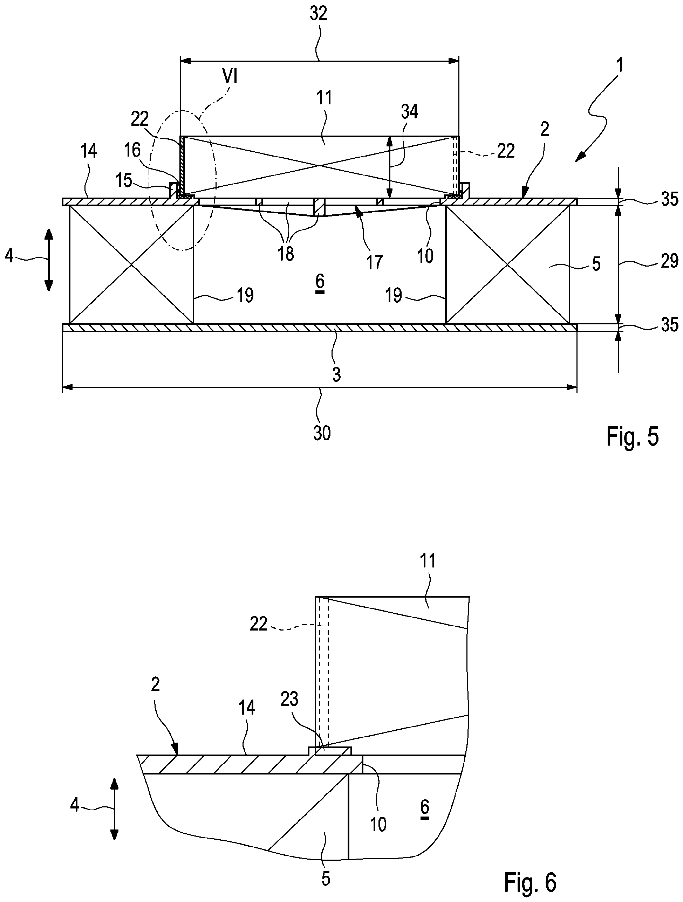

Der jeweilige Zusatz-Filterkörper 11, 13 kann in die zugehörige Zusatz-Durchtrittsöffnung 10, 12 eingesetzt sein, wie dies beispielsweise in Fig. 3 angedeutet ist. Bevorzugt ist jedoch eine in den Figuren 4 bis 6 gezeigte Ausführungsform, bei welcher der Zusatz-Filterkörper 11 die zugehörige Zusatz-Durchtrittsöffnung 10 an einer vom Innenraum 6 abgewandten Außenseite 14 der jeweiligen Endplatte 2 abdeckt. In den Beispielen der Fig. 4 und 5 besitzt die jeweilige Endplatte 2 einen die Zusatz-Durchtrittsöffnung 10 einfassenden Kragen 15, der von der Endplatte 2 nach außen absteht und in den der Zusatz-Filterkörper 11 axial eingesetzt ist. Gemäß Fig. 5 kann eine Dichtung 16 zwischen dem Kragen 15 und einem außenliegenden Rand des Zusatz-Filterkörpers 11 ausgebildet sein. Eine derartige Dichtung 16 kann beispielsweise durch eine Klebstoffraupe realisiert sein.

Gemäß Fig. 5 kann in der Zusatz-Durchtrittsöffnung 10 eine luftdurchlässige Stützstruktur 17 angeordnet sein, an der sich der Zusatz-Filterkörper 11 axial abstützen kann. Beispielsweise kann die Stützstruktur 17 mit mehreren, kreuzförmigen Stegen 18 gebildet sein, die insbesondere integral an der jeweiligen Endplatte 2 ausgeformt sein können.

Anstelle einer derartigen Dichtung 16, die zusätzlich zum jeweiligen Zusatz-Filterkörper 11 und der jeweiligen Endplatte 2 vorgesehen werden muss, kann gemäß Fig. 6 auch vorgesehen sein, den Zusatz-Filterkörper 11 randseitig und axial mit der Endplatte 2 zu verschweißen bzw. zu plastifizieren. Hierzu kann die Endplatte 2 mit einer Verbindungskontur 23 ausgestattet sein, die sich in der Umfangsrichtung geschlossen umlaufend um die jeweilige Zusatz-Durchtrittsöffnung 10 erstreckt und die für eine Verklebung, vorzugsweise für eine Verschweißung oder Plastifizierung, mit dem Zusatz-Filterkörper 11 besonders geeignet ist.

Gemäß Fig. 1 kann sich die Zusatz-Durchtrittsöffnung 10 beispielsweise bis zur offenen Seite 8 des Haupt-Filterkörpers 5 erstrecken. Bei den Ausführungsformen der Figuren 2 und 4 endet die Zusatz-Durchtrittsöffnung 10 mit einem Abstand gegenüber der offenen Seite 8 des Haupt-Filterkörpers 5. Wie sich beispielsweise Fig. 5 entnehmen lässt, kann sich die Zusatz-Durchtrittsöffnung 10 bis zu einer dem Innenraum 6 zugewandten Innenseite 19 des Haupt-Filterkörpers 5 erstrecken. Insgesamt lässt sich ein Bereich der jeweiligen Endplatte 2, der in einer parallel zur Axialrichtung 4 orientierten Axialprojektion innerhalb des Haupt-Filterkörpers 5 liegt, zur Realisierung der Zusatz-Durchtrittsöffnung 10 nutzen. Bevorzugt ist die jeweilige Zusatz-Durchtrittsöffnung 10 in der Axialrichtung jedoch mit einer rechteckigen Geometrie ausgestattet, wodurch besonders einfach rechteckig konfektionierte Filterkörper verwendet werden können, um den jeweiligen Zusatz-Filterkörper 11 bzw. 13 zu realisieren.

Gemäß den Figuren 1 und 3 besitzt das Luftfilterelement 1 außerdem eine Verschlussplatte 20, die an der offenen Seite 8 des Haupt-Filterkörpers 5 angeordnet ist und die dort an den beiden Endplatten 2, 3 befestigt ist. Diese Verschlussplatte 20 enthält die Haupt-Durchtrittsöffnung 9. Mit Hilfe der Verschlussplatte 20 können gleichzeitig die der offenen Seite 8 zugewandten Stirnseiten 21 des Haupt-Filterkörpers 5 luftdicht verschlossen werden. Beispielsweise handelt es sich beim Haupt-Filterkörper 5 um ein plissiertes Filtermaterial, dessen Falten parallel zur Axialrichtung 4 verlaufen. Mit der Verschlussplatte 20 sind dann Endfalten des Filtermaterials luftdicht verbunden, die sich an besagten Stirnseiten 21 befinden.

Der jeweilige Zusatz-Filterkörper 11 bzw. 13 ist bevorzugt ein ebener Plattenfilterkörper, der aus einem plissierten Filtermaterial besteht und dessen Falten quer zur Axialrichtung 4 verlaufen. Bevorzugt besitzt auch der Plattenfilterkörper quer zur Axialrichtung 4, also quer zu seiner Haupt-Durchströmungsrichtung, eine rechteckige Außenkontur.

Gemäß Fig. 5 kann der als Plattenfilterkörper konfigurierte Zusatz-Filterkörper 11 zumindest an zwei quer zu den Falten verlaufenden Randseiten einen bandförmigen Seitenstreifen 22 aufweisen, um eine Randseite Leckage bzw. Bypassströmung zu vermeiden. Der Seitenstreifen 22 kann zweckmäßig in der Umfangsrichtung geschlossen umlaufend konfiguriert sein. Insbesondere kann es sich beim Seitenstreifen 22 um ein Filtermaterial handeln. Der Seitenstreifen 22 kann angeklebt oder angeschweißt sein.

Bei den hier gezeigten Ausführungsformen sind die beiden Endplatten 2, 3 jeweils eben konfiguriert, so dass sie sich jeweils in einer nicht näher bezeichneten Plattenebene erstrecken. Die zugehörige Zusatz-Durchtrittsöffnung 10 bzw. 12 kann dann zweckmäßig in der jeweiligen Plattenebene liegen.

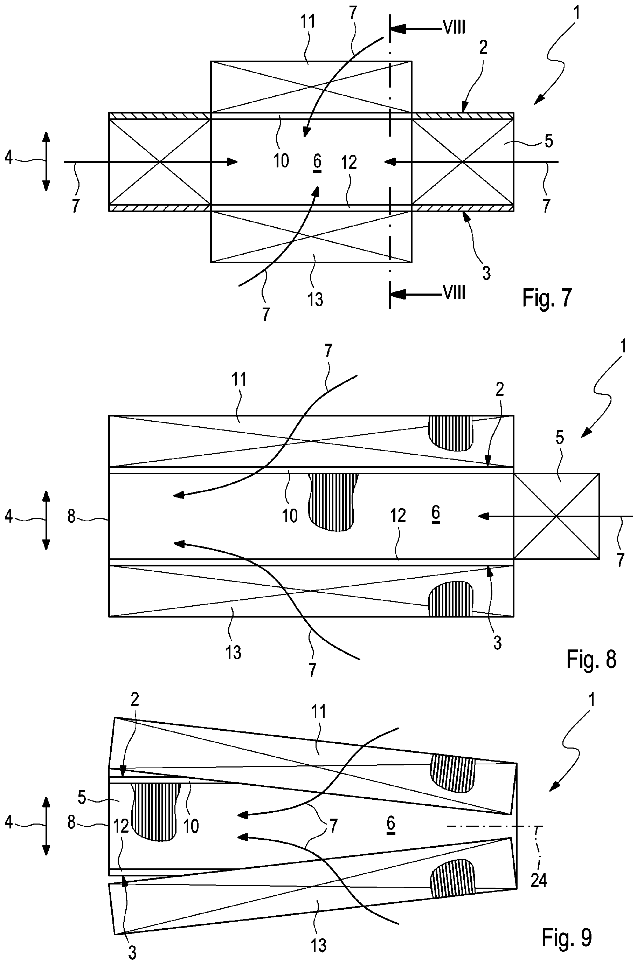

Zumindest bei den Ausführungsformen der Figuren 4, 5, 7 und 8 erstrecken sich die beiden Endplatten 2, 3 parallel zueinander und jeweils senkrecht zur Axialrichtung 4. Abweichend dazu zeigt Fig. 9 rein exemplarisch eine Ausführungsform, bei der zumindest eine der Endplatten 2, 3, im Beispiel der Fig. 9 beide Endplatten 2, 3, gegenüber einer senkrecht zur Axialrichtung 4 verlaufenden Normalebene 24 geneigt verlaufen. Im Beispiel der Fig. 9 erstrecken sich zumindest die beiden Zusatz-Filterkörper 11, 13 geneigt zur Normalebene 24.

Entsprechend Fig. 2 kann das Luftfilterelement 1 außerdem mit einer Befestigungskonsole 25 ausgestattet sein. Die Befestigungskonsole 25 ist dabei in einem der offenen Seite 8 des Haupt-Filterkörpers 5 gegenüberliegenden Bereich an beiden Endplatten 2, 3 befestigt. Beispielsweise kann die Befestigungskonsole 25 mit beiden Endplatten 2, 3 verschweißt oder verklebt oder plastifiziert sein. Die Befestigungskonsole 25 weist einen Befestigungsabschnitt 26 auf, mit dessen Hilfe das Luftfilterelement 1 in einem Filtergehäuse der zugehörigen Luftfiltereinrichtung fixierbar ist. Hierzu kann der Befestigungsabschnitt 26 beispielsweise ein Befestigungsauge 27 aufweisen.

Wie sich den Figuren 1 und 2 entnehmen lässt, kann zumindest eine der Endplatten 2, 3 an ihrem Außenrand wenigstens ein (weiteres) Befestigungsauge 28 aufweisen. Auch diese Befestigungsaugen 28 der jeweiligen Endplatte 2, 3 können zur Fixierung des Luftfilterelements 1 im zugehörigen Filtergehäuse genutzt werden.

Wie sich insbesondere den Figuren 4 und 5 entnehmen lässt, ist ein in der Axialrichtung 4 gemessener Abstand 29 zwischen den Endplatten 2, 3 kleiner ist als eine quer zur Axialrichtung 4 gemessene Breite 30 der jeweiligen Endplatte 2, 3 und kleiner als eine quer zur Axialrichtung 4 und quer zur Breitenrichtung gemessene Länge 31 der jeweiligen Endplatte 2, 3. Hierdurch ergibt sich eine besonders flache Bauform für das Luftfilterelement 1. Des Weiteren ist hier vorgesehen, dass der Abstand 29 zwischen den Endplatten 2, 3 auch kleiner ist als eine parallel zur Breite 30 der Endplatten 2, 3 gemessene Breite 32 des jeweiligen Zusatz-Filterkörpers 11, 13 und als eine parallel zur Längsrichtung der Endplatten 2, 3 gemessene Länge 33 des jeweiligen Zusatz-Filterkörpers 11, 13. Diese Bauform führt zu einer besonders großen Filterfläche.

Weiterhin kann entsprechend einer besonders vorteilhaften Ausführungsform eine parallel zur Axialrichtung 4 gemessene Höhe 34 des jeweiligen Zusatz-Filterkörpers 11, 13 größer sein, insbesondere mindestens 5 Mal größer oder mindestens 10 Mal größer, als eine parallel zur Axialrichtung 4 gemessene Dicke 35 der jeweiligen Endplatte 2, 3 und/oder als eine Dicke des vorzugsweise gefalteten bzw. plissierten Filtermaterials, aus dem der Zusatz-Filterkörper 11, 13 hergestellt ist. Vorzugsweise sind der Haupt-Filterkörper 5 und der jeweilge Zusatz-Filterkörper 11, 13 aus dem gleichen Filtermaterial hergestellt, so dass sich bei den unterschiedlichen bzw. separaten Filterkörpern 5, 11, 13 dieselbe Filtrationswirkung einstellt.

## Patentansprüche

1. Luftfilterelement für eine Luftfiltereinrichtung einer Frischluftanlage einer Brennkraftmaschine, vorzugsweise in einem Kraftfahrzeug,
- mit einem U-förmigen Haupt-Filterkörper (5), der einen Innenraum (6) quer zu einer Axialrichtung (4) des Luftfilterelements (1) begrenzt,
- mit zwei Endplatten (2, 3), die in der Axialrichtung (4) voneinander beabstandet sind und zwei voneinander abgewandte axiale Seiten des Haupt-Filterkörpers (5) luftdicht verschließen,
- wobei der Haupt-Filterkörper (5) quer zur Axialrichtung (4) von Luft durchströmbar ist,
- wobei im Bereich einer offenen Seite (8) des Haupt-Filterkörpers (5) eine zum Innenraum (6) offene Haupt-Durchtrittsöffnung (9) vorgesehen ist, die als Lufteinlass oder Luftauslass dient und quer zur Axialrichtung (4) von Luft durchströmbar ist,
- wobei zumindest eine der Endplatten (2, 3) eine zum Innenraum (6) offene Zusatz-Durchtrittsöffnung (10, 12) aufweist, der ein Zusatz-Filterkörper (11, 13) zugeordnet ist, derart, dass die Zusatz-Durchtrittsöffnung (10, 12) durch den Zusatz-Filterkörper (11, 13) von Luft durchströmbar ist,
- wobei der Zusatz-Filterkörper (11, 13) parallel zur Axialrichtung (4) von Luft durchströmbar ist,
**dadurch gekennzeichnet,**
**dass** eine Höhe (34) des jeweiligen Zusatz-Filterkörpers (11, 13) größer ist als eine Dicke (35) der jeweiligen Endplatte (2, 3).

2. Luftfilterelement nach Anspruch 1,
**dadurch gekennzeichnet,**
**dass** der Zusatz-Filterkörper (11, 13) die Zusatz-Durchtrittsöffnung (10, 12) an einer Seite der Endplatte (2, 3) abdeckt.

3. Luftfilterelement nach Anspruch 1 oder 2,
**dadurch gekennzeichnet,**
**dass** die Endplatte (2, 3) einen die Zusatz-Durchtrittsöffnung (10, 12) einfassenden, von der Endplatte (2, 3) abstehenden Kragen (15) aufweist, in den der Zusatz-Filterkörper (11, 13) axial eingesetzt ist.

4. Luftfilterelement nach einem der Ansprüche 1 bis 3,
**dadurch gekennzeichnet,**
**dass** in der Zusatz-Durchtrittsöffnung (10, 12) eine luftdurchlässige Stützstruktur (17) angeordnet ist, an der sich der Zusatz-Filterkörper (11, 13) axial abstützt.

5. Luftfilterelement nach einem der Ansprüche 1 bis 4,
**dadurch gekennzeichnet,**
**dass** der Zusatz-Filterkörper (11, 13) an einer vom Innenraum (6) abgewandten Außenseite (14) der Endplatte (2, 3) angeordnet ist.

6. Luftfilterelement nach einem der Ansprüche 1 bis 5,
**dadurch gekennzeichnet,**
**dass** sich die Zusatz-Durchtrittsöffnung (10, 12) bis zur offenen Seite (8) des Haupt-Filterkörpers (5) erstreckt.

7. Luftfilterelement nach einem der Ansprüche 1 bis 6,
**dadurch gekennzeichnet,**
**dass** sich die Zusatz-Durchtrittsöffnung (10, 12) bis zu einer dem Innenraum (6) zugewandten Innenseite (19) des Haupt-Filterkörpers (5) erstreckt.

8. Luftfilterelement nach einem der Ansprüche 1 bis 7,
**gekennzeichnet durch** eine Verschlussplatte (20), die an der offenen Seite (8) des Haupt-Filterkörpers (5) angeordnet und an den beiden Endplatten (2, 3) befestigt ist, wobei die Verschlussplatte (20) die Haupt-Durchtrittsöffnung (9) aufweist.

9. Luftfilterelement nach einem der Ansprüche 1 bis 8,
**dadurch gekennzeichnet,**
**dass** der jeweilige Zusatz-Filterkörper (11, 13) ein ebener Plattenfilterkörper aus einem plissierten Filtermaterial ist, dessen Falten quer zur Axialrichtung (4) verlaufen.

10. Luftfilterelement nach Anspruch 9,
**dadurch gekennzeichnet,**
**dass** der jeweilige Zusatz-Filterkörper (11, 13) zumindest an zwei quer zu den Falten verlaufenden Randseiten einen bandförmigen Seitenstreifen (22) aufweist.

11. Luftfilterelement nach einem der Ansprüche 1 bis 10,
**dadurch gekennzeichnet,**
**dass** der Haupt-Filterkörper (5) ein plissiertes Filtermaterial aufweist, dessen Falten parallel zur Axialrichtung (4) verlaufen.

12. Luftfilterelement nach einem der Ansprüche 1 bis 11,
**dadurch gekennzeichnet,**
**dass** die Endplatten (2, 3) eben konfiguriert sind.

13. Luftfilterelement nach einem der Ansprüche 1 bis 12,
**dadurch gekennzeichnet,**
**dass** zumindest eine der Endplatten (2, 3) gegenüber einer senkrecht zur Axialrichtung (4) verlaufenden Normalebene (24) geneigt ist.

14. Luftfilterelement nach einem der Ansprüche 1 bis 13,
**dadurch gekennzeichnet,**
**dass** zumindest eine Endplatte (2, 3) an ihrem Außenrand wenigstens ein Befestigungsauge (28) aufweist.

15. Luftfilterelement nach einem der Ansprüche 1 bis 14,
**gekennzeichnet durch** eine Befestigungskonsole (25), die in einem der offenen Seite (8) des Haupt-Filterkörpers (5) gegenüberliegenden Bereich an beiden Endplatten (2, 3) befestigt ist, und die wenigstens einen Befestigungsabschnitt (26) zum Fixieren des Luftfilterelements (1) in einem Filtergehäuse aufweist.

16. Luftfilterelement nach einem der vorhergehenden Ansprüche,
**dadurch gekennzeichnet,**
**dass** ein Abstand (29) zwischen den Endplatten (2, 3) kleiner ist als eine Breite (30) der jeweiligen Endplatte (2, 3) und/oder als eine Länge (31) der jeweiligen Endplatte (2, 3).

17. Luftfilterelement nach einem der vorhergehenden Ansprüche,
**dadurch gekennzeichnet,**
**dass** ein Abstand (29) zwischen den Endplatten (2, 3) kleiner ist als eine Breite (32) des jeweiligen Zusatz-Filterkörpers (11, 13) und/oder als eine Länge (33) des jeweiligen Zusatz-Filterkörpers (11, 13).

18. Luftfilterelement nach einem der vorhergehenden Ansprüche,
**dadurch gekennzeichnet,**
**dass** die Höhe (34) des jeweiligen Zusatz-Filterkörpers (11, 13) größer ist als eine Dicke des Filtermaterials, aus dem der Zusatz-Filterkörper (11, 13) hergestellt ist.

## Claims

1. Air filter element for an air filter device of a fresh air apparatus of an internal combustion engine, preferably in a motor vehicle,
- with a U-shaped main filter body (5), which limits an inner chamber (6) transversely in relation to an axial direction (4) of the air filter element (1),
- with two end plates (2, 3), which are distanced from one another in the axial direction (4) and which close in an airtight manner two axial sides facing away from one another of the main filter body (5),
- wherein air can flow through the main filter body (5) transversely to the axial direction (4),
- wherein in the region of an open side (8) of the main filter body (5) is provided a main through opening (9) which is open to the inner chamber (6), which through opening serves as air inlet or air outlet and through which air can flow transversely to the axial direction (4),
- wherein at least one of the end plates (2, 3) has an additional through opening (10, 12) which is open to the inner chamber (6), which additional through opening has an additional filter body (11, 13), such, that air can flow through the additional through opening (10, 12) through the additional filter body (11, 13),
- wherein air can flow through the additional filter body (11, 13) in a manner parallel to the axial direction (4)
**characterised in that**
a height (34) of the respective additional filter body (11, 13) is greater than a thickness (35) of the respective end plate (2, 3).

2. Air filter element according to claim 1,
**characterised in that**
the additional filter body (11, 13) covers the additional through opening (10, 12) at one side of the end plate (2, 3).

3. Air filter element according to claims 1 or 2,
**characterised in that**
the end plate (2, 3) has a flange (15) enclosing the additional through opening (10, 12) and protruding from the end plate (2, 3), into which flange the additional filter body (11, 13) is axially inserted.

4. Air filter element according to one of claims 1 to 3,
**characterised in that**
an air permeable support structure (17) is disposed in the additional through opening (10, 12), upon which structure is supported axially the additional filter body (11, 13).

5. Air filter element according to one of claims 1 to 4,
**characterised in that**
the additional filter body (11, 13) is disposed at an exterior side (14), facing away from the inner chamber (6), of the end plate (2, 3).

6. Air filter element according to one of claims 1 to 5,
**characterised in that**
the additional through opening (10, 12) extends until the open side (8) of the main filter body (5).

7. Air filter element according to one of claims 1 to 6,
**characterised in that**
the additional through opening (10, 12) extends until an inner side (19), facing the inner chamber (6), of the main filter body (5).

8. Air filter element according to one of claims 1 to 7,
**characterised by** a sealing plate (20), which is disposed at the open side (8) of the main filter body (5) and fastened to the two end plates (2, 3), wherein the sealing plate (20) includes the main through opening (9).

9. Air filter element according to one of claims 1 to 8,
**characterised in that**
each additional filter body (11, 13) is a planar plate filter body made of a pleated filter material, the folds of which extend transversely to the axial direction (4).

10. Air filter element according to claim 9,
**characterised in that**
each additional filter body (11, 13) has, at at least two edge sides extending transversely to the folds, a strip-shaped side stripe (22).

11. Air filter element according to one of claims 1 to 10,
**characterised in that**
the main filter body (5) has a pleated filter material of which the folds extend in a manner parallel to the axial direction (4).

12. Air filter element according to one of claims 1 to 11,
**characterised in that**
the end plates (2, 3) are configured in a planar manner.

13. Air filter element according to one of claims 1 to 12,
**characterised in that**
at least one of the end plates (2, 3) is inclined with respect to a normal plane (24) which extends perpendicularly to the axial direction (4).

14. Air filter element according to one of claims 1 to 13,
**characterised in that**
at least one of the end plates (2, 3) has at least one fastening eye (28) at its outer edge.

15. Air filter element according to one of claims 1 to 14,
**characterised by** a mounting bracket (25) which is mounted at both end plates (2, 3) in an area opposite to the open side (8) of the main filter body (5), and which has at least one fastening section (26) for fixing the air filter element (1) in a filter housing.

16. Air filter element according to one of the previous claims,
**characterised in that**
a distance (29) between the end plates (2, 3) is smaller than a breadth (30) of the respective end plate (2, 3) and/or than a length (31) of the respective end plate (2, 3).

17. Air filter element according to one of the preceding claims,
**characterised in that**
a distance (29) between the end plates (2, 3) is smaller than a breadth (32) of the respective additional filter body (11, 13) and/or than a length (33) of the respective additional filter body (11, 13).

18. Air filter element according to one of the preceding claims,
**characterised in that**
the height (34) of the respective additional filter body (11, 13) is greater than a thickness of the filter material from which the additional filter body (11, 13) is manufactured.

## Revendications

1. Elément de filtre à air pour un dispositif de filtre à air d'une installation d'air frais d'un moteur à combustion interne, de préférence dans un véhicule automobile,
- avec un corps de filtre principal (5) en forme de U qui délimite un espace intérieur (6) transversalement à un sens axial (4) de l'élément de filtre à air (1),
- avec deux plaques d'extrémité (2, 3) qui sont espacées dans le sens axial (4) l'une de l'autre et ferment de manière étanche à l'air deux côtés axiaux éloignés l'un de l'autre du corps de filtre principal (5),
- dans lequel le corps de filtre principal (5) peut être traversé transversalement au sens axial (4) par de l'air,
- dans lequel dans la zone d'un côté ouvert (8) du corps de filtre principal (5) une ouverture de passage principal (9) ouverte vers l'espace intérieur (6) est prévue, laquelle sert d'entrée d'air ou de sortie d'air et peut être traversée transversalement au sens axial (4) par de l'air,
- dans lequel au moins une des plaques d'extrémité (2, 3) présente une ouverture de passage supplémentaire (10, 12) ouverte vers l'espace intérieur (6) à laquelle est associé un corps de filtre supplémentaire (11, 13) de telle manière que l'ouverture de passage supplémentaire (10, 12) au travers du corps de filtre supplémentaire (11, 13) puisse être traversée par de l'air,
- dans lequel le corps de filtre supplémentaire (11, 13) peut être traversé parallèlement au sens axial (4) par de l'air,
**caractérisé en ce**
**qu'**une hauteur (34) du corps de filtre supplémentaire (11, 13) respectif est supérieure à une épaisseur (35) de la plaque d'extrémité (2, 3) respective.

2. Elément de filtre à air selon la revendication 1,
**caractérisé en ce**
**que** le corps de filtre supplémentaire (11, 13) recouvre l'ouverture de passage supplémentaire (10, 12) au niveau d'un côté de la plaque d'extrémité (2, 3).

3. Elément de filtre à air selon la revendication 1 ou 2,
**caractérisé en ce**
**que** la plaque d'extrémité (2, 3) présente un collet (15) dépassant de la plaque d'extrémité (2, 3), bordant l'ouverture de passage supplémentaire (10, 12), dans lequel le corps de filtre supplémentaire (11, 13) est inséré axialement.

4. Elément de filtre à air selon l'une quelconque des revendications 1 à 3,
**caractérisé en ce**
**que** dans l'ouverture de passage supplémentaire (10, 12) une structure de support (17) perméable à l'air est disposée, contre laquelle s'appuie axialement le corps de filtre supplémentaire (11, 13).

5. Elément de filtre à air selon l'une quelconque des revendications 1 à 4,
**caractérisé en ce**
**que** le corps de filtre supplémentaire (11, 13) est disposé au niveau d'un côté extérieur (14) de la plaque d'extrémité (2, 3) éloigné de l'espace intérieur (6).

6. Elément de filtre à air selon l'une quelconque des revendications 1 à 5,
**caractérisé en ce**
**que** l'ouverture de passage supplémentaire (10, 12) s'étend jusqu'au côté ouvert (8) du corps de filtre principal (5).

7. Elément de filtre à air selon l'une quelconque des revendications 1 à 6,
**caractérisé en ce**
**que** l'ouverture de passage supplémentaire (10, 12) s'étend jusqu'à un côté intérieur (19), tourné vers l'espace intérieur (6), du corps de filtre principal (5).

8. Elément de filtre à air selon l'une quelconque des revendications 1 à 7,
**caractérisé par** une plaque de fermeture (20) qui est disposée au niveau du côté ouvert (8) du corps de filtre principal (5) et est fixée aux deux plaques d'extrémité (2, 3), dans lequel la plaque de fermeture (20) présente l'ouverture de passage principale (9).

9. Elément de filtre à air selon l'une quelconque des revendications 1 à 8,
**caractérisé en ce**
**que** le corps de filtre supplémentaire (11, 13) respectif est un corps de filtre à plaque plan en un matériau de filtration plissé, dont les plissements s'étendent transversalement au sens axial (4).

10. Elément de filtre à air selon la revendication 9,
**caractérisé en ce**
**que** le corps de filtre supplémentaire (11, 13) respectif présente au moins au niveau de deux côtés de bord s'étendant transversalement aux plissements un ruban latéral en forme de bande (22).

11. Elément de filtre à air selon l'une quelconque des revendications 1 à 10,
**caractérisé en ce**
**que** le corps de filtre principal (5) présente un matériau de filtration plissé, dont les plissements s'étendent parallèlement au sens axial (4).

12. Elément de filtre à air selon l'une quelconque des revendications 1 à 11,
**caractérisé en ce**
**que** les plaques d'extrémité (2, 3) sont configurées de manière plane.

13. Elément de filtre à air selon l'une quelconque des revendications 1 à 12,
**caractérisé en ce**
**qu'**au moins une des plaques d'extrémité (2, 3) est inclinée par rapport à un plan normal (24) s'étendant perpendiculairement au sens axial (4).

14. Elément de filtre à air selon l'une quelconque des revendications 1 à 13,
**caractérisé en ce**
**qu'**au moins une plaque d'extrémité (2, 3) présente au niveau de son bord extérieur au moins un oeillet de fixation (28).

15. Elément de filtre à air selon l'une quelconque des revendications 1 à 14,
**caractérisé par** une console de fixation (25) qui est fixée dans une zone opposée au côté ouvert (8) du corps de filtre principal (5) aux deux plaques d'extrémité (2, 3), et qui présente au moins une section de fixation (26) pour la fixation de l'élément de filtre à air (1) dans un boîtier de filtre.

16. Elément de filtre à air selon l'une quelconque des revendications précédentes,
**caractérisé en ce**
**qu'**une distance (29) entre les plaques d'extrémité (2, 3) est inférieure à une largeur (30) de la plaque d'extrémité (2, 3) respective et/ou à une longueur (31) de la plaque d'extrémité (2, 3) respective.

17. Elément de filtre à air selon l'une quelconque des revendications précédentes,
**caractérisé en ce**
**qu'**une distance (29) entre les plaques d'extrémité (2, 3) est inférieure à une largeur (32) du corps de filtre supplémentaire (11, 13) respectif et/ou à une longueur (33) du corps de filtre supplémentaire (11, 13) respectif.

18. Elément de filtre à air selon l'une quelconque des revendications précédentes,
**caractérisé en ce**
**que** la hauteur (34) du corps de filtre supplémentaire (11, 13) respectif est supérieure à une épaisseur du matériau de filtration, duquel le corps de filtre supplémentaire (11, 13) est fabriqué.
